# EUROPEAN PATENT APPLICATION

(11) **EP 3 788 867 A1**
(43) Date of publication of application: **10.03.2021**
(21) Application number: 20194298.4
(22) Date of filing: 03.09.2020
(51) Int. Cl.: A01G 5/02, A01G 5/04

(54) **A SYSTEM FOR AUTOMATICALLY ARRANGING FLOWER BOUQUETS**

(30) Priority: 03.09.2019 GB 201912640
(71) Applicant: Intergreen (UK) Ltd, Holbeach Lincolnshire PE12 8LT (GB)
(72) Inventor: Davies, Paul, Holbeach, Lincolnshire PE12 8LT (GB)
(74) Representative: Serjeants LLP

(57) **Abstract**

The present invention provides a system and a method for automatically arranging bouquets of cut flowers (4). The system comprises a discharge station (3) on which the bouquets are formed, a feeding conveyor (1) that presents individual flowers (4) in an inverted orientation, and a robotic arm (2) programmed to remove presented flowers (4) individually from the feeding conveyor (1) and position them on one of a plurality of receiving locations (6) that are located on the discharge station (3). By placing flowers (4) in an appropriate position on a receiving location (6) a bouquet can be automatically arranged without manual input. In embodiments of the invention each receiving location (6) is divided into a plurality of placement positions (9) to facilitate the arrangement of flowers (4) on or in a receiving location (6). The present invention also provides a method of automatically arranging bouquets of cut flowers (4). The method of the present invention can be implemented using the system of the present invention.

## Description

### Field of the Invention

The present invention relates to the arranging of cut flowers into bouquets. In particular, the invention relates to the mechanical arranging of cut flowers into bouquets with minimal human action required.

### Background to the Invention

Cut flowers are typically sold in pre-arranged bouquets. These bouquets are sold in various locations, including supermarkets, garages, and convenience stores, and there is a huge demand for them. For small-scale and artisan producers every bouquet will be hand arranged from a suitable selection of flowers available to a florist. However, due to demand a large number of bouquets that are sold in locations such as supermarkets, garages, and convenience stores, are mass-produced using an automated or semi-automated process.

Some simple bouquets that consist of a single type of flower, for example a bouquet consisting solely of roses, are currently arranged automatically without human intervention. This is possible as it is not important where any individual flower is positioned within the bouquet. Such bouquets can be arranged relatively simply just by passing flowers along an appropriate conveyor to a receiving location, where they are collected and then wrapped to form a bouquet. The flowers are not positioned in pre-defined or specific locations within a receiving location.

More complex bouquets consisting of several different types of flower can be arranged semiautomatically using a skilled arranger. The arranger is provided with a map indicating the position of each type of flower within a bouquet and is provided with a supply of each type of flower. The arranger will then form a bouquet by selecting the appropriate flowers and positioning them within the bouquet in accordance with the map. The step of the process that can be automated is the provision of the flowers to the arranger and this may be achieved by means of a suitable conveyor.

The demand for flower bouquets is growing and the cost of employing suitable arrangers is significant. In light of this there is a need for an improved system and method for arranging bouquets of cut flowers that increases automation and thereby reduces production costs. Any such system and method should be suitable for arranging bouquets consisting of several different types of flower in a predesigned arrangement.

### Summary of the Invention

The present invention provides a system for producing arranged bouquets of cut flowers, the system comprising:
a discharge station on which the bouquets are formed;
a feeding conveyor that presents individual flowers in an inverted orientation; and
a robotic arm programmed to remove presented flowers individually from the feeding conveyor and position them on one of a plurality of receiving locations that are located on the discharge station.

The present system is advantageous in that it provides an automated system for arranging bouquets of cut flowers that can comprise different types of flowers in a pre-set arrangement without requiring human intervention to arrange the flowers appropriately. By providing individual flowers in an inverted orientation on a feeding conveyor it is possible to allow a suitable robotic arm to remove the flowers individually and place them on a receiving location.

Any suitable robotic arm can form part of the system of the present invention. One suitable robotic arm is the ARB IRB 1200-5/0.9 industrial robot from Geku Automation. Trials have determined that this robotic arm is capable of operating with sufficient speed, accuracy, and delicacy for the system of the present invention. The robotic arm can remove an individual flower from the feeding conveyor and position it appropriately on a receiving location in less than five seconds. When in operation it is advantageous that the robotic arm grasps flowers by the stem, this being the most robust part of a flower. A limiting factor on the time taken to remove and position a flower has been found to be the delicacy of a stem of the flower. This is because greater precision is required to handle flowers with more delicate stems whilst more robust stems require less precision. In order to facilitate handling of flower stems without damaging them it is advantageous that grippers of a robotic arm are lined with a soft material such as a polymeric foam material. This can provide grip on a flower stem without crushing the stem. The grippers of a robotic arm may be any suitable gripper, for example finger grippers. A further limiting factor on the time taken to position a flower is the accuracy with which a flower is required to be positioned at a receiving location.

Any suitable conveyor can form part of the system of the present invention. A conveyor of the present invention should be able to transport individual flowers in an inverted position to present to them to the robotic arm. For example, a conveyor suitable for use in the present invention is disclosed in EP3020662. The conveyor of EP3020662 is able to transport individual flowers in an inverted position.

The conveyor of the system of the present invention can be fed with flowers in any suitable manner. In embodiments of the invention a feeding belt and an elevator may be used to feed the flowers to the conveyor. Flowers may be separated by a suitable separator before being fed to the conveyor. It is considered that the skilled person will readily understand how the conveyor may be fed and which apparatus are suitable for doing so.

In order to allow bouquets of flowers to be easily formed it may be advantageous that each receiving location is shaped to retain a plurality of flowers corresponding to an individual bouquet. That is, rather than being flat, each receiving location may be shaped to retain the plurality of flowers thereon. For example, a receiving location may be provided with one or more raised edges and/or a receiving location may be formed as a depression in which flowers are positioned. In embodiments of the invention each receiving location is substantially U-shaped such that flowers positioned in the location are retained therein by the shape of the location.

In order to allow flowers at any specific receiving location to be correctly positioned in relation to other flowers at the same receiving location it may be advantageous that each receiving location comprises dividing means to divide the receiving location into a plurality of sub-locations to provide a plurality of placement positions within the receiving location. By providing suitable dividing means relatively complex flower arrangements can be arranged by the system of the present invention. In particular, by placing the appropriate flower in the correct placement position within a receiving location flowers can be arranged relative to one another in a simple manner. Suitable dividing means will be apparent to the person skilled in the art and any such dividing means may be utilised in the system of the present invention.

A receiving location of a system of the present invention may be divided into any appropriate number of placement positions. The required number of placement positions will be dependent on the complexity of arrangement required in the bouquets that are being arranged. For simple bouquets only a small number of placement positions will be required, whilst in more complex arrangements a greater number of placement positions will be required. In embodiments of the invention the receiving location may comprise at least three placement positions. In embodiments of the invention the receiving location may comprise at least five placement positions.

Dividing means that act to divide a receiving location into placement positions may be formed in any suitable manner that allows flowers to be positioned in each placement position of the receiving location by the robotic arm without hindrance. In embodiments of the invention the dividing means may comprise pins protruding outwardly from a receiving location. For example, a dividing means may consist of one or more pins extending vertically from an upper surface of the receiving location. As flowers will generally be positioned on a receiving location such that their stems are substantially aligned with one another as few as two pins can satisfactorily divide adjacent placement positions from one another.

The discharge station of the present invention may comprise a movable conveyor with the receiving locations formed thereon such that, when in use, the receiving locations can be moved along the movable conveyor. This can be advantageous as it can allow receiving locations to be appropriately positioned relative to the robotic arm to allow flowers to be positioned thereon and then to be moved away from the robotic arm after a receiving location is filled. Further providing the receiving locations on a movable conveyor allows the system of the present invention to form a substantially automated production line for arranging bouquets of flowers. If the discharge station comprises a movable conveyor when the system is operated the movable conveyor may be controlled to move in any suitable manner. In embodiments of the invention when the system is in use a movable conveyor of the discharge station will be moved at a substantially constant speed.

When the system of the present invention is in use the feeding conveyor may be moved at a substantially constant rate such that flowers are presented to the robotic arm at a constant rate. The rate at which the feeding conveyor is moved may be dependent on the complexity of the bouquets being arranged and/or the fragility of the stems of the flowers being arranged. This is because greater precision may be required for arranging more complex bouquets and for grasping more fragile stems. If greater precision is required then the feeding conveyor may be moved at a slower speed.

The present invention also provides a method of arranging a bouquet of cut flowers comprising the steps of:
i) moving the cut flowers that will form the bouquet individually in an inverted orientation along a flower conveyor; then
ii) using a robotic arm to remove each flower in turn from the flower conveyor and to position them on a receiving location located on a discharge station; and then
iii) removing the flowers from the receiving location and wrapping them to form a bouquet.

The method is advantageous in that it provides a method for arranging complex bouquets of flowers with minimal human intervention required.

The method of the present invention may be implemented using the system of the present invention. When the method is implemented using the system of the present invention then the system may comprise any of the optional features discussed above in relation to the system of the present invention. For example, the receiving location may shaped to retain a plurality of flowers corresponding to an individual bouquet e.g. the receiving location may be substantially U-shaped.

As set out above, each receiving location may comprise dividing means to divide the receiving location into a plurality of sub-locations to provide a plurality of placement positions within the receiving location. If the receiving locations are formed in this manner then each flower may be positioned in one of the plurality of placement positions by the robotic arm in accordance with an intended position of the flower within the bouquet when the method of the present invention is operated. The number of placement positions in the receiving location will depend on the complexity of the bouquets being arranged. For simple bouquets the receiving location may comprise as few as three placement positions, for more complex bouquets the receiving location may comprise five or more placement positions.

As will be readily understood by the skilled person, the method of the present invention may be operated to arrange a plurality of bouquets of cut flowers by repeatedly carrying out the method of the present invention in order to arrange a plurality of bouquets, wherein each of the plurality of bouquets is associated with a separate receiving location of the discharge station. That is, the method of the present invention may be operated repeatedly, possibly continuously, to arrange a plurality of bouquets.

The features and advantages of the present invention will be further apparent from the preferred embodiment that is shown in the drawing and is described below.

### Drawings

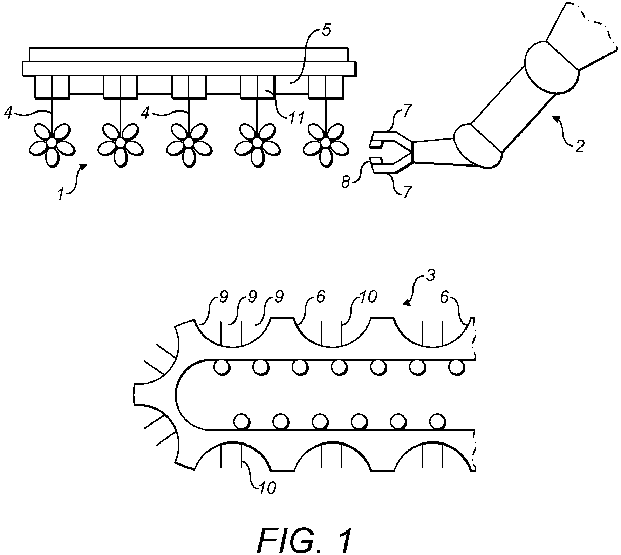

Figure 1 is schematic diagram of a system according to the present invention.

A system according to an embodiment of the present invention is shown in Figure 1. The system consists of a feeding conveyor 1, a discharge station 3, and a robotic arm 2.

The feeding conveyor 1 is substantially as described and shown in Figure 2 of EP3020662. In particular, the feeding conveyor 1 comprises cooperating endless belts between which flower stems are held and the cut flowers 4 are thereby held in an inverted position. In order that the flowers are not damaged the endless belts are provided with stem gripping portions 11 formed of sponge in which the stems of the cut flowers 4 are held. At an end of the feeding conveyor 1 the cut flowers 4 are presented to the robotic arm 3.

The discharge station 2 comprises a conveyor 9 that has a plurality of U-shaped receiving locations 6 located thereon. Each receiving location 6 is a location where an individual bouquet of cut flowers 4 will be arranged. Each receiving location 6 is divided into three separate placement positions 9 by pins 10 located appropriately in the receiving location, this allows relatively simply bouquets to be arranged. The pins 10 extend outwardly from an external surface of the receiving location 6.

The robotic arm 3 is an ARB IRB 1200-5/0.9 industrial robot from Geku Automation. The robotic arm 3 has finger grippers 7 for grasping stems of the cut flowers 4. The finger grippers 7 are lined with a polymeric foam material 8 which allows the grippers to grasp the cut flowers 4 without damaging them.

When in use, the feeding conveyor 1 individually conveys cut flowers 4 towards the robotic arm 3. Each cut flower 4 is held in an inverted position such that they are substantially vertical and have their head at a lower end. The feeding conveyor 1 carefully grips a stem of each flower between the stem gripping portions 11 formed on the endless belts 5. The feeding conveyor 1 is operated at a substantially constant speed. In this manner the feeding conveyor 1 presents a cut flower 4 to the robotic arm 2 in a uniform position at an end of the feeding conveyor 1 at regular intervals.

When a cut flower 4 is presented to the robotic arm 3, the robotic arm grips the cut flower, removes the cut flower from the feeding conveyor 1 and then positions the flower in a receiving location 6 located on the discharge station 2. In particular, the robotic arm 2 delicately grasps the cut flower 4 between its finger grippers 7, moves the cut flower to the appropriate placement position 9 within the receiving location 6 and then releases the cut flower. The robotic arm 3 is controlled by a suitable controller (not shown). Utilising current technology it is anticipated that the process of removing a cut flower 4 from the feeding conveyor 1 to a placement position 9 within a receiving location 6 will take between 2 and 5 seconds depending on the fragility of the stem of the cut flower 4 and the relative size of the placement position 9 and cut flower 4.

When a receiving location 6 has had an appropriate number of cut flowers 4 placed therein the conveyor of the discharge station 3 will move the receiving location away from the robotic arm 2 towards an outer end of the discharge station. At the outer end of the discharge station 3 the cut flowers 4 will be removed from the receiving location 6 as a complete bouquet and wrapped. The wrapping of a bouquet can be carried out manually or by an appropriate wrapping apparatus (not shown).

## Claims

1. A system for producing arranged bouquets of cut flowers, the system comprising:
a discharge station on which the bouquets are formed;
a feeding conveyor that presents individual flowers in an inverted orientation; and
a robotic arm programmed to remove presented flowers individually from the feeding conveyor and position them on one of a plurality of receiving locations that are located on the discharge station.

2. A system according to claim 1, wherein each receiving location is shaped to retain a plurality of flowers corresponding to an individual bouquet.

3. A system according to claim 2, wherein each receiving location is substantially U-shaped.

4. A system according to claim 2 or claim 3, wherein each receiving location comprises dividing means to divide the receiving location into a plurality of sub-locations to provide a plurality of placement positions within the receiving location.

5. A system according to claim 4, wherein each receiving location comprises at least three placement positions.

6. A system according to any preceding claim, wherein the discharge station comprises a movable conveyor.

7. A system according to claim 6, wherein when in use the movable conveyor and/or the feeding conveyor is moved at a constant speed.

8. A method of arranging a bouquet of cut flowers comprising the steps of:
iv) moving the cut flowers that will form the bouquet individually in an inverted orientation along a flower conveyor; then
v) using a robotic arm to remove each flower in turn from the flower conveyor and to position them on a receiving location located on a discharge station; and then
vi) removing the flowers from the receiving location and wrapping them to form a bouquet.

9. A method according to claim 8, wherein the receiving location is shaped to retain a plurality of flowers corresponding to an individual bouquet.

10. A method according to claim 9, wherein the receiving location is substantially U-shaped.

11. A method according to claim 9 or claim 10, wherein each receiving location comprises dividing means to divide the receiving location into a plurality of sub-locations to provide a plurality of placement positions within the receiving location and each flower is positioned in one of the plurality of placement positions by the robotic arm in accordance with an intended position of the flower within the bouquet.

12. A method according to claim 11, wherein each receiving location comprises at least three placement positions.

13. A method according to any of claims 8 to 12, wherein the receiving location is located on a receiving conveyor.

14. A method according to claim 13, wherein the receiving conveyor and/or the flower conveyor is moved at a constant speed during operation of the method.

15. A method of arranging a plurality of bouquets of cut flowers comprising repeatedly carrying out the method of any of claims 8 to 14 in order to arrange a plurality of bouquets, wherein each of the plurality of bouquets is associated with a separate receiving location.
